# EUROPÄISCHE PATENTANMELDUNG

(11) **EP 2 068 012 A2**
(43) Veröffentlichungstag der Anmeldung: **10.06.2009**
(21) Anmeldenummer: 08105905.7
(22) Anmeldetag: 01.12.2008
(51) Int. Cl.: F16B 33/06

(54) **Schraube mit einem gehärteten Gewindeteil**

(30) Priorität: 03.12.2007 EP 07360061
(71) Anmelder: BSH Bosch und Siemens Hausgeräte GmbH, 81739 München (DE)
(72) Erfinder: Desor, Jürgen, 67100 Strasbourg (FR)

(57) **Zusammenfassung**

Die Erfindung geht aus von einer Vorrichtung, insbesondere einer Hausgerätvorrichtung, mit wenigstens einer Schraube (10; 10a; 10b).

Um eine stabile Befestigung zu erreichen, wird vorgeschlagen, dass die Schraube (10; 10a) wenigstens einen gehärteten Gewindeteil (16; 16a) aufweist.

## Beschreibung

Die Erfindung geht aus von einer Vorrichtung nach dem Oberbegriff des Anspruchs 1.

Es ist eine Vorrichtung mit einer Schraube für eine Befestigung eines Befestigungsbauteils bekannt.

Die Aufgabe der Erfindung besteht insbesondere darin, eine gattungsgemäße Vorrichtung mit verbesserten Eigenschaften hinsichtlich einer stabilen Befestigung bereitzustellen.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Vorrichtung, insbesondere einer Hausgerätvorrichtung, mit wenigstens einer Schraube.

Es wird vorgeschlagen, dass die Schraube wenigstens einen gehärteten Gewindeteil aufweist. Unter einem "gehärteten Gewindeteil" einer Schraube soll insbesondere ein einem Härtungsverfahren unterzogener Teil eines Gewindes der Schraube verstanden werden, welcher nach Beendigung des Verfahrens eine größere Härte aufweist als unmittelbar vor Beginn des Verfahrens. Mit einer erfindungsgemäßen Ausgestaltung kann insbesondere eine besonders stabile Befestigung erreicht werden. Ferner kann insbesondere auf eine Einprägung eines Innengewindes verzichtet werden und ein Reißen von Gewindegängen bzw. eine Beschädigung von Gewindezähnen vermieden werden. Der Gewindeteil ist insbesondere ein Teil eines M4-Gewindes.

Ferner wird vorgeschlagen, dass die Schraube nicht rostend ist. Hierdurch kann eine hohe Widerstandsfähigkeit erreicht werden. Besonders vorteilhaft ist die Schraube zumindest teilweise aus einem Edelstahl gebildet, wodurch eine kostengünstige Bauweise erreicht werden kann.

Mit Vorteil ist der Gewindeteil kolsterisiert. Auf diese Weise kann bei einer gleich bleibenden Form der Schraube eine sehr hohe Härte erreicht werden. Vorteilhaft kann außerdem eine hohe Temperaturbeständigkeit im Besonderen bei einem Pyrolysebetrieb eines Gargeräts erreicht werden.

In einer bevorzugten Ausführungsform der Erfindung ist die Schraube gewindefurchend. Hierdurch kann auf einfache Weise eine gut elektrisch leitende Verbindung zwischen der Schraube und einem Innengewinde erreicht werden. Insbesondere kann mittels der Schraube eine verschleißfreie Schraubverbindung erzeugt werden. Die Schraube ist insbesondere dazu vorgesehen, ein Gewinde in eine Blechschicht und/oder in zumindest eine Emailschicht zu furchen.

Vorzugsweise weist die Schraube wenigstens einen zylinderförmigen Gewindebereich auf. Hierdurch kann auf einfache Weise eine besonders gut elektrisch leitende Verbindung zwischen der Schraube und einem Innengewinde erreicht werden.

Vorzugsweise weist die Schraube wenigstens einen Gewindebereich auf, welcher sich in eine Einschraubrichtung verjüngt. Insbesondere "verjüngt sich der Gewindebereich" in eine Einschraubrichtung, wenn es eine den Gewindebereich in einer Seitenansicht begrenzende Hüllkurve gibt, welche sich in der Einschraubrichtung verjüngt. Eine Einschraubrichtung der Schraube ist im Besonderen eine Richtung, welche von einem Kopf der Schraube zu einer Spitze der Schraube bzw. einer abgerundeten Spitze der Schraube, welche insbesondere bei einem Beginn eines Einschraubens der Schraube in ein Bauteil an das Bauteil angesetzt wird, verläuft. Ein Gewindebereich ist insbesondere das gesamte Gewinde der Schraube. Hierdurch kann bei einem Einschrauben der Schraube ein qualitativ hochwertiges und insbesondere passgenaues Gewinde gebildet werden.

Mit Vorteil weist die Schraube einen Kopf mit zumindest einer Verzahnung auf. Auf diese Weise kann eine besonders stabile Befestigung erreicht werden.

Mit Vorteil weist die Schraube einen Öffnungswinkel von ca. 24° auf. Ein "Öffnungswinkel" einer Schraube ist insbesondere ein Öffnungswinkel eines Kegels, welcher ein Teil der Schraube ist und an einem dem Schraubenkopf gegenüberliegenden Ende der Schraube angeordnet ist und im Besonderen eine abgerundete Spitze aufweist. Darunter, dass ein Winkel "ca. 24°" beträgt, soll insbesondere verstanden werden, dass der Winkel um weniger als zwanzig Grad, im Besonderen um weniger als acht Grad und besonders vorteilhaft um weniger als drei Grad von 24° abweicht. Damit kann ein einfaches Einschrauben der Schraube erreicht werden.

In einer bevorzugten Ausgestaltung der Erfindung weist die Vorrichtung zumindest ein Befestigungsbauteil auf, welches dazu vorgesehen ist, mit der Schraube eine Schraubverbindung einzugehen, und welches wenigstens eine Emailschicht aufweist. Hiermit kann ein einfacher Korrosionsschutz erreicht werden. Ein "Befestigungsbauteil" ist insbesondere ein Bauteil, an welchem in einem montierten Zustand zumindest ein weiteres Bauteil befestigt ist, wobei die Befestigung im Besonderen durch die Schraubverbindung realisiert ist.

Vorzugsweise weist die Vorrichtung zumindest ein Befestigungsbauteil auf, welches dazu vorgesehen ist, mit der Schraube eine Schraubverbindung einzugehen, und welches zumindest teilweise aus einem Edelstahl gebildet ist. Hierdurch kann eine verschleißfreie Schraubverbindung zwischen dem Befestigungsbauteil und der Schraube, welche insbesondere zumindest teilweise aus einem Edelstahl gebildet ist und gewindefurchend ist, erreicht werden. Im Besonderen wird ein Aufreißen bzw. eine Beschädigung von Gewindegängen, ein Fressen und ein Klemmen bei wiederholtem Ein- und Ausschrauben der Schraube in das Befestigungsbauteil vermieden.

Mit Vorteil weist die Vorrichtung zumindest ein Befestigungsbauteil auf, welches eine kragenförmige Ausformung zur Kopplung mit der Schraube aufweist. Hiermit kann vorteilhaft eine große Kontaktfläche zwischen dem Befestigungsbauteil und der Schraube erreicht werden. Insbesondere kann, falls das Befestigungsbauteil wenigstens eine Emailschicht aufweist, ein Abplatzen von Email vorteilhaft verhindert werden. Die Ausformung erstreckt sich im Besonderen in eine Längsrichtung der Schraube und/oder bildet eine Umhüllung der Schraube. Die "kragenförmige" Ausformung eines Befestigungsbauteils ist insbesondere eine Ausformung, welche eine Oberfläche aufweist, die sich im Wesentlichen senkrecht zu einer Oberfläche des Befestigungsbauteils erstreckt, und welche zumindest teilweise eine Ausnehmung des Befestigungsbauteils begrenzt. Insbesondere erstreckt sich eine erste Oberfläche "senkrecht" zu einer zweiten Oberfläche, wenn die erste Oberfläche einen ersten ebenen Flächenteil und die zweite Oberfläche einen zweiten ebenen Flächenteil aufweist und die Flächenteile jeweils in einer Ebene liegen, so dass die beiden Ebenen zumindest einen Winkel einschließen, welcher um weniger als dreißig Grad, im Besonderen um weniger als zehn Grad und besonders vorteilhaft um weniger als drei Grad von neunzig Grad abweicht.

Ferner wird vorgeschlagen, dass die Vorrichtung zumindest ein Befestigungsbauteil und wenigstens ein Bauteil aufweist, welches aufgrund einer Befestigung an dem Befestigungsbauteil mittels der Schraube geerdet ist. Auf diese Weise kann eine kompakte Bauweise erreicht werden. Das Bauteil ist im Besonderen der VDE-Erdungsnorm 28.3 entsprechend geerdet. Das Bauteil ist vorzugsweise ein Heizvorgangsfunktionselement. Im Besonderen ist ein "Heizvorgangsfunktionselement" ein Temperaturfühler, ein Verteilerblech und/oder ein Heizkörper. Hierdurch kann ein sicherer Betrieb eines Heizvorgangs erreicht werden. Insbesondere ist das Befestigungsbauteil elektrisch leitend mit der Erde verbunden.

Mit Vorteil weist die Vorrichtung zumindest ein Befestigungsbauteil auf, welches dazu vorgesehen ist, mit der Schraube eine Schraubverbindung einzugehen, und das ein Bauteil einer Gargerätmuffel ist. Hiermit kann eine verschleißarme und besonders flexible Befestigung eines Bauteils an einer Gargerätmuffel erreicht werden. Insbesondere kann eine besonders korrosionsfeste Ausbildung der Gargerätmuffel erreicht werden. Das Befestigungsbauteil kann eine Gargerätmuffelwand sein.

Weiterhin wird ein Hausgerätherstellverfahren vorgeschlagen, bei welchem eine zumindest teilweise aus einem Edelstahl gebildete Schraube mit einem gehärteten Gewindeteil in eine Ausnehmung eines Befestigungsbauteils, welche eine Email-Schicht aufweist, geschraubt wird. Mit einem erfindungsgemäßen Verfahren kann eine besonders stabile Befestigung erreicht werden.

Vorzugsweise wird vor dem Einschrauben der Schraube in zumindest einen Teil des Befestigungsbauteils ein gewindefreier Kragen eingeprägt, in welchen von der Schraube ein Gewinde gefurcht wird. Hierdurch kann eine große Kontaktfläche zwischen dem Befestigungsbauteil und der Schraube erreicht werden. Insbesondere wird hierdurch ein Abplatzen von Email verhindert.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: ein Hausgerät mit einer Vorrichtung,
- Fig. 2: einen Schnitt durch die Vorrichtung,
- Fig. 3: eine Ansicht einer in ein Blech eingeprägten kragenförmigen Ausformung,
- Fig. 4: einen Schnitt durch eine kragenförmige Ausformung mit einem Innengewinde,
- Fig. 5: eine Seitenansicht eines alternativen Ausführungsbeispiels einer Schraube und
- Fig. 6: einen Schnitt durch ein alternatives Ausführungsbeispiel einer Vorrichtung.

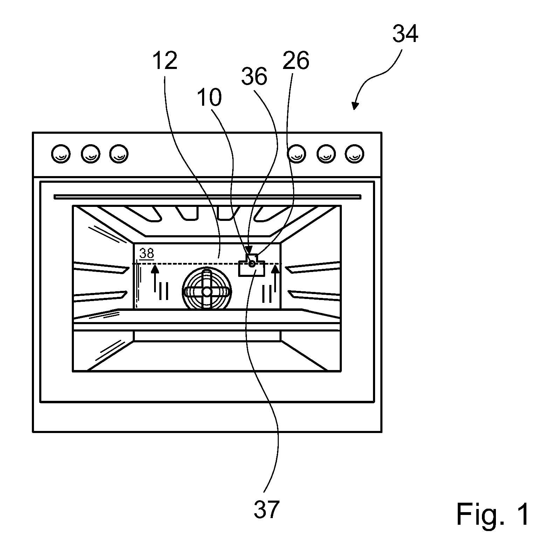

Figur 1 zeigt ein als Gargerät ausgebildetes Hausgerät 34 mit einer Vorrichtung 36. Die Vorrichtung 36 weist ein Bauteil 26 auf, welches ein Heizvorgangsfunktionselement 37 umfasst und das mittels einer gewindefurchenden Schraube 10 an ein Befestigungsbauteil 12 geschraubt ist. Das Befestigungsbauteil 12 ist ein Teil einer Gargerätmuffel 38 des Hausgeräts 34. Insbesondere bildet das Befestigungsbauteil 12 eine Gargerätmuffelwand, die einen Garraum begrenzt.

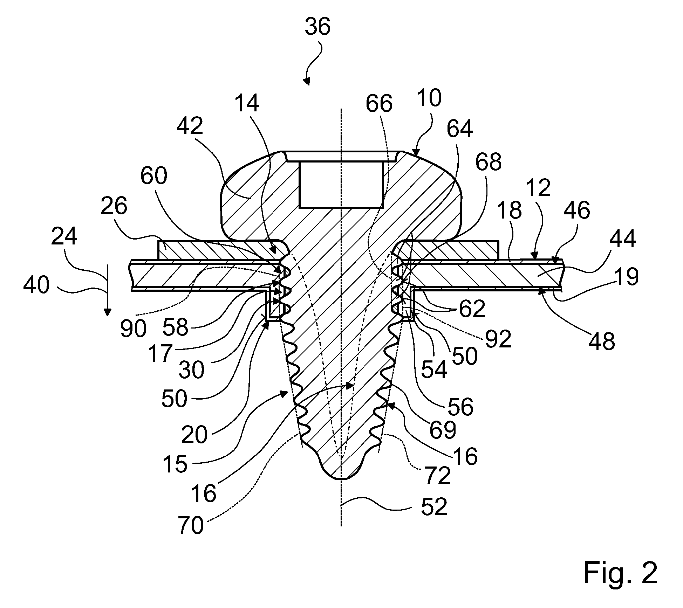

Figur 2 zeigt einen II-II-Schnitt durch die Vorrichtung 36 entlang einer Haupterstreckungsrichtung 40 der Schraube 10, durch die Schraube 10, durch das Bauteil 26 und durch das Befestigungsbauteil 12 in einem montierten Zustand. Die Schraube 10 ist aus dem A2-Edelstahl mit der Materialnummer 1.4567 hergestellt und weist einen durch Kolsterisieren gehärteten Gewindeteil 16 auf, welcher eine Schraubverbindung 14 mit dem Befestigungsbauteil 12 eingeht. Hierbei ist das Bauteil 26 mit dem Befestigungsbauteil 12 mittels der Schraube 10 befestigt. Die Schraubverbindung 14 hält ein Einschraubdrehmoment von drei Newtonmeter beschädigungslos aus. Ein Kopf 42 der Schraube 10 ist als Rundkopf ausgebildet und liegt in dem montierten Zustand an dem Bauteil 26 an. Die Schraube 10 drückt das Bauteil 26 gegen das Befestigungsbauteil 12 und durchsetzt sowohl das Bauteil 26 als auch das Befestigungsbauteil 12.

Ein Blech 44, welches aus Edelstahl hergestellt ist, und zwei Emailschichten 18, 19 sind Bestandteile des Befestigungsbauteils 12. Eine Oberseite 46 des Blechs 44 wird von der Emailschicht 18, eine Unterseite 48 des Blechs 44 von der Emailschicht 19 bedeckt. Prinzipiell ist auch denkbar, dass nur eine oder keine Seite des Blechs 44 mit einer Emailschicht bedeckt ist. Das Blech 44 weist eine Dicke von achthundert Mikrometern, die Emailschichten 18, 19 weisen jeweils eine Dicke von hundert Mikrometern auf, wobei prinzipiell auch eine dünnere Ausführung oder eine dickere Ausgestaltung einer der Emailschichten 18, 19 von bis zu zweihundert Mikrometern oder mehr denkbar ist. Das Bauteil 26 liegt an der Emailschicht 18 an. Ein Teil des Befestigungsbauteils 12 ist eine kragenförmige Ausformung 20, welche eine Ausnehmung 30 des Befestigungsbauteils 12 umrandet, durch welche die Schraube 10 geschraubt ist. Eine Oberfläche 50 der Ausformung 20 weist eine Form eines ein Millimeter hohen Zylindermantels auf und erstreckt sich parallel zu einer Zylinderachse 52 des Zylindermantels, welche senkrecht zu der Ober- und Unterseite 46, 48 des Blechs 44 gerichtet ist. Die Oberfläche 50 schließt direkt an die Emailschicht 19 an und wird von einer hundert Mikrometer dicken Emailschicht 54 gebildet. Unterhalb der Emailschicht 54 umfasst die Ausformung 20 einen Fortsatz 56 des Blechs 44, welcher für die Ausformung 20 formbestimmend ist und mit dem Blech 44 einen rechten Winkel bildet.

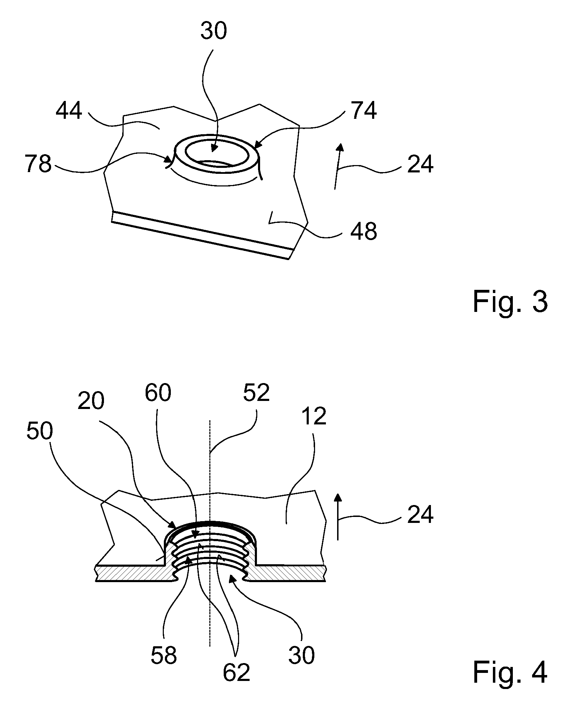

Eine Innenseite 58 des Befestigungsbauteils 12, welche von der Ausformung 20, dem Blech 44 und der Emailschicht 18 gebildet ist, weist ein Innengewinde 60 auf. In das Innengewinde 60 ist die Schraube 10 verschraubt. Das Innengewinde 60 weist Oberflächenteile 62 des Fortsatzes 56 aus Blech auf, welche in dem montierten Zustand an dem Gewindeteil 16 der Schraube 10 anliegen. Da die Schraube 10 auch das Bauteil 26 berührt und leitend ist, besteht mittels der Schraube 10 eine leitende Verbindung zwischen dem Bauteil 26 und dem Blech 44. Weil das Befestigungsbauteil 12 geerdet ist, ist somit auch das Bauteil 26 geerdet. Eine VDE-konforme Erdung entsprechend der Erdungsnorm 28.3 besteht außerdem deshalb, weil die Länge des Innengewindes 60 mehr als halb so lang wie der Durchmesser des Innengewindes 60 ist (Figur 4).

Eine Einschraubrichtung 24 ist parallel zu der Haupterstreckungsrichtung 40 der Schraube 10 und der Zylinderachse 52 und verläuft von dem Kopf 42 auf das Befestigungsbauteil 12 zu. Der Gewindeteil 16 weist eine Verzahnung 82 mit Zähnen 64 auf, welche in der Schnittansicht von Figur 2 eine Form eines imaginären Dreiecks aufweisen, wobei eine Seite 66 des Dreiecks innerhalb der Schraube 10 angeordnet ist. Dieser Seite 66 liegt ein Eckpunkt 68, 69 des Dreiecks gegenüber, welcher an einer Oberfläche der Schraube 10 angeordnet ist. Ein Gewindebereich 17 des Gewindeteils 16, welcher an dem Innengewinde 60 anliegt, weist Zylinderform auf. Werden links von der Zylinderachse 52 liegende Eckpunkte 68 und rechts von der Zylinderachse 52 angeordnete Eckpunkte des Gewindebereichs 17 verbunden, ergeben sich in der Schnittansicht von Figur 2 zwei geradlinige Hüllkurven 90, 92, welche ausgehend von dem Kopf 42 parallel zueinander und zu der Einschraubrichtung 24 verlaufen. Ein von dem Gewindebereich 17 verschiedener Gewindebereich 15 des Gewindeteils 16, welcher sich ausgehend von dem Gewindebereich 17 zur Spitze der Schraube 10 erstreckt und durch das Befestigungsbauteil 12 hindurch geschraubt ist, weist konische Form auf. Werden links von der Zylinderachse 52 liegende Eckpunkte 69 und rechts von der Zylinderachse 52 angeordnete Eckpunkte verbunden, ergeben sich in der Schnittansicht von Figur 2 zwei Hüllkurven 70, 72, welche ausgehend von dem Gewindebereich 17 in der Einschraubrichtung 24 aufeinander zulaufen und deren Abstand in einer Richtung senkrecht zu der Haupterstreckungsrichtung 40 sich entlang der Einschraubrichtung 24 verjüngt.

Die Vorrichtung 36 wird in einem Hausgerätherstellverfahren zusammengebaut, das nachfolgend beschrieben wird. Dazu wird um die Ausnehmung 30 des Blechs 44 eine kragenförmige Ausformung 74 eingeprägt (Figur 3), welche danach zusammen mit dem Blech 44 mit einer Emailschicht konstanter Dicke überzogen wird. Die Ausformung 74 geht in einem gekrümmten Bereich 78 in das Blech 44 über und bildet auf dem Blech 44 einen Krater. Nach dem Aufbringen der Emailschicht wird die Schraube 10 von einer dem Krater abgewandten Seite des Blechs 44 eingeschraubt, wobei die Schraube 10 das Innengewinde 60 (Figuren 2 und 4) in die Ausformung 74 formt und die Ausformung 74 dabei zu der Ausformung 20 gemäß der Darstellung in Figur 2 umformt. Nach dem Einschrauben der Schraube 10 ist die Vorrichtung 36 montiert.

Figur 4 zeigt einen Schnitt durch die kragenförmige Ausformung 20 mit dem Innengewinde 60, wobei auf die Darstellung der Emailschichten 18, 19 (siehe Figur 2) verzichtet wurde.

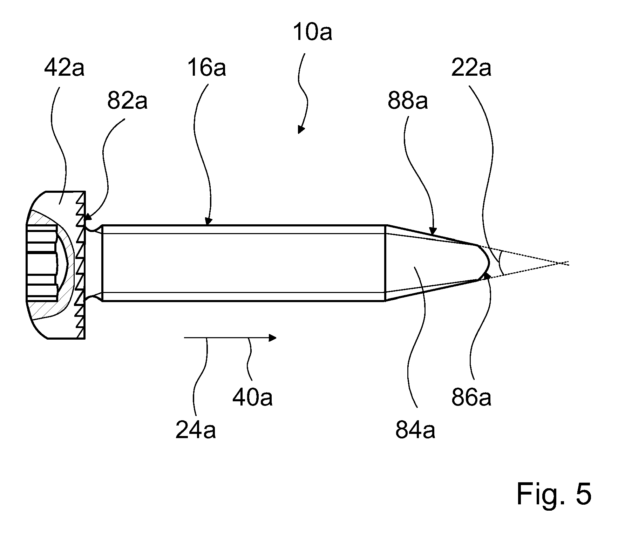

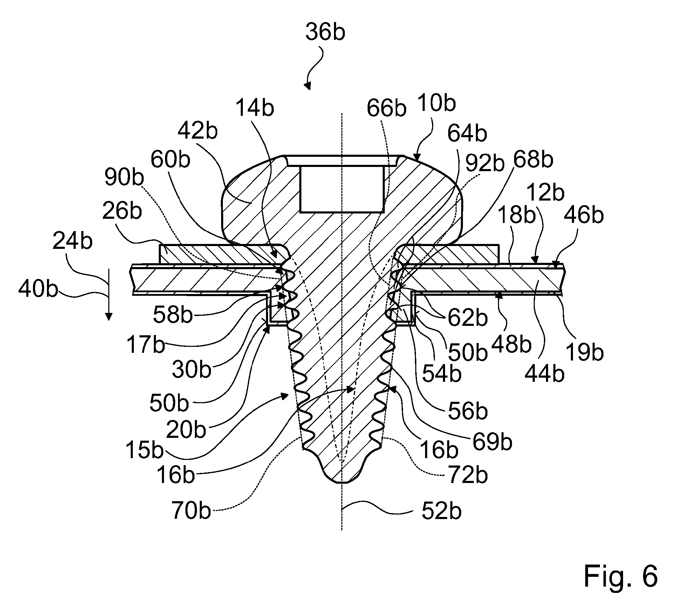

In den Figuren 5 und 6 sind alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele in den Figuren 5 und 6 die Buchstaben "a" bzw. "b" hinzugefügt. Die nachfolgende Beschreibung beschränkt sich im Wesentlichen auf die Unterschiede zu dem Ausführungsbeispiel in den Figuren 1 bis 4, wobei bezüglich gleich bleibender Bauteile, Merkmale und Funktionen auf die Beschreibung des Ausführungsbeispiels in den Figuren 1 bis 4 verwiesen werden kann.

Figur 5 zeigt eine Seitenansicht des alternativen Ausführungsbeispiels einer Schraube 10a mit einem Schnitt durch einen Teil eines Kopfes 42a der Schraube 10a. Auf eine detaillierte Darstellung eines Gewindeteils 16a der Schraube 10a wurde der Übersichtlichkeit halber verzichtet. An einer Seite des Kopfes 42a, welche in einem montierten Zustand an dem Bauteil 26 anliegt, weist die Schraube 10a eine Verzahnung 82a auf, welche in einem montierten Zustand der Schraube 10a, in welchem die Verzahnung 82a an dem Bauteil 26 anliegt, ein Herausschrauben der Schraube 10a erschwert. Ferner weist die Schraube 10a einen Frontbereich 84 mit der Form eines Kegels 88 mit abgerundeter Spitze 86 auf, der an einem Ende der Schraube 10a angeordnet ist, welches dem Kopf 42a gegenüberliegt. Der Kegel 88 weist einen Öffnungswinkel 22 von 24° auf. In einer Haupterstreckungsrichtung der Schraube 10a besitzt diese eine Länge von acht Millimetern.

Figur 6 zeigt ein alternatives Ausführungsbeispiel einer Vorrichtung 36b. Die Vorrichtung 36b weist eine Schraube 10b mit Hüllkurven 90b, 92b in einem Gewindebereich 17b und Hüllkurven 70b, 72b in einem Gewindebereich 15b auf. Die Hüllkurven 70b, 90b sind parallel und schließen unmittelbar aneinander an. Dasselbe gilt für die Hüllkurven 72b, 92b. Die Hüllkurven 70b, 72b, 90b, 92b laufen ausgehend von einem Kopf 42b der Schraube 10b aufeinander zu. Insgesamt ist ein Gewindeteil 16b konisch ausgebildet.

### Bezugszeichen

- 10: Schraube
- 12: Befestigungsbauteil
- 14: Schraubverbindung
- 15: Gewindebereich
- 16: Gewindeteil
- 17: Gewindebereich
- 18: Emailschicht
- 19: Emailschicht
- 20: Ausformung
- 22: Öffnungswinkel
- 24: Einschraubrichtung
- 26: Bauteil
- 30: Ausnehmung
- 34: Hausgerät
- 36: Vorrichtung
- 37: Heizvorgangsfunktionselement
- 38: Gargerätmuffel
- 40: Haupterstreckungsrichtung
- 42: Kopf
- 44: Blech
- 46: Oberseite
- 48: Unterseite
- 50: Oberfläche
- 52: Zylinderachse
- 54: Emailschicht
- 56: Fortsatz

- 58: Innenseite
- 60: Innengewinde
- 62: Oberflächenteil
- 64: Zahn
- 66: Seite
- 68: Eckpunkt
- 69: Eckpunkt
- 70: Hüllkurve
- 72: Hüllkurve
- 74: Ausformung
- 78: Bereich
- 82: Verzahnung
- 84: Frontbereich
- 86: Spitze
- 88: Kegel
- 90: Hüllkurve
- 92: Hüllkurve

## Patentansprüche

1. Vorrichtung, insbesondere Hausgerätvorrichtung, mit wenigstens einer Schraube (10; 10a; 10b),
**dadurch gekennzeichnet, dass**
die Schraube (10; 10a; 10b) wenigstens einen gehärteten Gewindeteil (16; 16a; 16b) aufweist.

2. Vorrichtung nach Anspruch 1,
**dadurch gekennzeichnet, dass**
die Schraube (10; 10a; 10b) nicht rostend ist.

3. Vorrichtung nach einem der vorherigen Ansprüche,
**dadurch gekennzeichnet, dass**
die Schraube (10; 10a; 10b) zumindest teilweise aus einem Edelstahl gebildet ist.

4. Vorrichtung nach einem der vorherigen Ansprüche,
**dadurch gekennzeichnet, dass**
der Gewindeteil (16; 16a; 16b) kolsterisiert ist.

5. Vorrichtung nach einem der vorherigen Ansprüche,
**dadurch gekennzeichnet, dass**
die Schraube (10; 10a; 10b) gewindefurchend ist.

6. Vorrichtung nach einem der vorherigen Ansprüche,
**dadurch gekennzeichnet, dass**
die Schraube (10) wenigstens einen zylinderförmigen Gewindebereich (17) aufweist.

7. Vorrichtung nach einem der vorherigen Ansprüche,
**dadurch gekennzeichnet, dass**
die Schraube (10; 10b) wenigstens einen Gewindebereich (15; 15b, 17b) aufweist, welcher sich in eine Einschraubrichtung (24; 24b) verjüngt.

8. Vorrichtung nach einem der vorherigen Ansprüche,
**dadurch gekennzeichnet, dass**
die Schraube (10a) einen Kopf (42a) mit zumindest einer Verzahnung (82a) aufweist.

9. Vorrichtung nach einem der vorherigen Ansprüche,
**dadurch gekennzeichnet, dass**
die Schraube (10a) einen Öffnungswinkel (22a) von ca. 24° aufweist.

10. Vorrichtung nach einem der vorherigen Ansprüche,
**gekennzeichnet durch**
zumindest ein Befestigungsbauteil (12; 12b), welches dazu vorgesehen ist, mit der Schraube (10; 10a; 10b) eine Schraubverbindung (14; 14b) einzugehen, und welches wenigstens eine Emailschicht (18, 19; 18b, 19b) aufweist.

11. Vorrichtung nach einem der vorherigen Ansprüche,
**gekennzeichnet durch**
zumindest ein Befestigungsbauteil (12; 12b), welches dazu vorgesehen ist, mit der Schraube (10; 10a; 10b) eine Schraubverbindung (14; 14b) einzugehen, und welches zumindest teilweise aus einem Edelstahl gebildet ist.

12. Vorrichtung nach einem der vorherigen Ansprüche,
**gekennzeichnet durch**
zumindest ein Befestigungsbauteil (12; 12b), welches eine kragenförmige Ausformung (20; 20b) zur Kopplung mit der Schraube (10; 10a; 10b) aufweist.

13. Vorrichtung nach einem der vorherigen Ansprüche,
**gekennzeichnet durch**
zumindest ein Befestigungsbauteil (12; 12b) und wenigstens ein Bauteil (26; 26b), welches aufgrund einer Befestigung an dem Befestigungsbauteil (12; 12b) mittels der Schraube (10; 10a; 10b) geerdet ist.

14. Vorrichtung nach Anspruch 13,
**dadurch gekennzeichnet, dass**
das Bauteil (26; 26b) ein Heizvorgangsfunktionselement ist.

15. Vorrichtung nach einem der vorherigen Ansprüche,
**gekennzeichnet durch**
zumindest ein Befestigungsbauteil (12; 12b), welches dazu vorgesehen ist, mit der Schraube (10; 10a; 10b) eine Schraubverbindung (14; 14b) einzugehen, und das ein Bauteil einer Gargerätmuffel (38) ist.

16. Hausgerät (34) mit wenigstens einer Vorrichtung (36; 36b) nach einem der Ansprüche 1 bis 15.

17. Hausgerätherstellverfahren, insbesondere zur Herstellung einer Vorrichtung nach einem der Ansprüche 1 bis 15, wobei eine zumindest teilweise aus einem Edelstahl gebildete Schraube (10; 10a) mit einem gehärteten Gewindeteil (16; 16a) in eine Ausnehmung (30) eines Befestigungsbauteils (12), welches eine Emailschicht (18) aufweist, geschraubt wird.

18. Hausgerätherstellverfahren nach Anspruch 17,
**dadurch gekennzeichnet, dass**
vor dem Einschrauben der Schraube (10; 10a) in zumindest einen Teil des Befestigungsbauteils (12) eine gewindefreie, kragenförmige Ausformung (20) eingeprägt wird, in welche von der Schraube (10: 10a) ein Innengewinde (60) gefurcht wird.
